# EUROPEAN PATENT APPLICATION

(11) **EP 1 298 468 A2**
(43) Date of publication of application: **02.04.2003**
(21) Application number: 02256770.5
(22) Date of filing: 27.09.2002
(51) Int. Cl.: G02B 6/34, G02B 5/32

(54) **Optical module and method of forming the optical module**

(30) Priority: 28.09.2001 JP 2001299352
(71) Applicant: Nippon Sheet Glass Co., Ltd., Osaka-shi, Osaka 541-8559 (JP)
(72) Inventor: Hamanaka, Kenjiro, c/o Nippon Sheet Glass Co. Ltd., Osaka-shi, Osaka (JP)
(74) Representative: Power, Philippa Louise

(57) **Abstract**

An object beam divided by a light division means (12) is caused to enter an optical fiber (23) and the object beam emitted from the optical fiber (23) is then caused to enter a photo-refractive polymer layer (6). On the other hand, a reference beam divided by the light division means (12) is irradiated on the photo-refractive polymer layer (6) from the opposite side. In this manner, the object beam is superimposed on the reference beam in the photo-refractive polymer layer (6) to form an interference pattern or fringe corresponding to the strength of light intensity. The interference pattern is recorded on the photo-refractive polymer layer (6) as a diffraction grating (4). This diffraction grating (4) exhibits a specific characteristic to emit the object beam emitted from the optical fiber (23) in the direction of the reference beam, namely parallel to an optical axis of the optical fiber (23).

## Description

The present invention relates to an optical module provided with an optical fiber block and a diffraction grating and a method of forming the optical module.

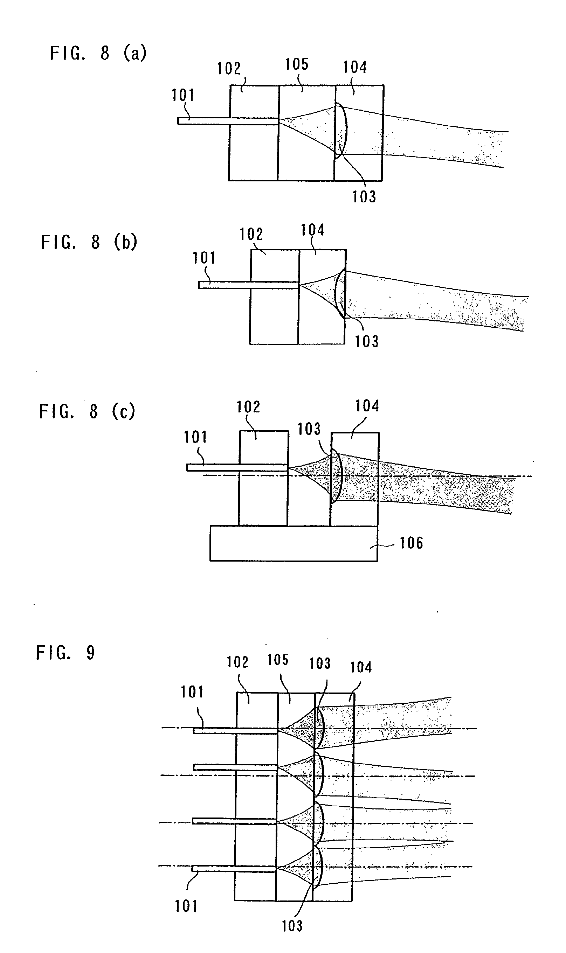

An optical module combining an optical fiber block with a microlens substrate is used as a device for optical communication. This optical module is designed to cause the light from a light emitting diode to enter a microlens via an optical fiber to take it out as a collimated beam and cause the collimated beam to enter the optical fiber via the microlens. A specific structure of such an optical module is shown in Figs. 8 (a)-(c).

An optical module shown in Fig. 8(a) is provided in which an optical fiber block 102 into which an optical fiber 101 is inserted is integrally formed with a microlens substrate 104 on which a microlens 103 is mounted, via a transparent spacer 105. On the other hand, an optical module shown in Fig. 8(b) is provided in which the optical fiber block 102 is directly secured to the microlens substrate 104. An optical module shown in Fig-. 8(c) is provided to have the optical fiber block 102 and the microlens substrate 104 secured to a base 106.

Referring to Fig. 9, a plurality of optical fibers 101 is inserted into the optical fiber block 102 and a plurality of microlenses 103 corresponding to the plurality of optical fibers 101 is formed on the microlens substrate 104. This structure is, for example, disclosed in Japanese Unexamined Patent Publication No. Hei 2-123301 (1990).

The microlens substrate 104 can be made by the following methods: a method of forming areas with different refractive indexes on a surface of a glass substrate by conducting an ion-exchange process via a mask; a method of embedding a resin of high refractive index in a depression formed by etching; a photopolymer molding method whereby an ultraviolet-curing resin is press-molded on a surface of the glass substrate; and a sol-gel method.

On the other hand, the optical fiber block 102 can be made by forming V-grooves at regular intervals on a silicon substrate or the like and fixedly securing the optical fibers into these grooves. In addition to this structure, it is also known that a stainless steel substrate or a glass substrate is provided with openings in advance into which the optical fibers are fixedly inserted.

In the optical module, it is essential for an optical axis of the optical fiber to coincide with that of the microlens for the improvement of communication accuracy. If their optical axes do not coincide with each other, an object beam does not run parallel to the optical axis as shown in Figs. 8 and 9.

A method of adjusting such an optical axis of the module is proposed and disclosed in Japanese Unexamined Patent Publication No. Hei 9-061666 (1997). In this prior art, a mask having a mesh-shaped pattern of the same array pitch as that of an optical fiber block and a collimating lens array (i.e., a microlens substrate) is placed in front of a detector for detecting a light beam shape. The light beam is caused to enter the collimating lens array via the optical fiber block. Further, the detector detects the light emitted from the collimating lens array and passing through the mask without being shielded thereby. A relative position of the optical fiber block and the collimating lens array is adjusted so that the light beam shape corresponding to each optical fiber is equalized.

In the conventional optical axis adjusting methods including one disclosed in Japanese Unexamined Patent Publication No. Hei 9-061666 (1997), the adjustment is made by moving either one of the optical fiber block or the microlens substrate. Accordingly, it is not only necessary to provide a special moving device for adjustment, but also the adjustment itself becomes very rough.

In particular, there are optical modules in which many optical fibers are combined with many microlenses. Many microlenses can be arranged in the microlens substrate in one or two-dimensional manner with a comparatively high accuracy. However, as far as the optical fiber block is concerned, it is essential to provide a process for forming grooves or making holes therein. Further, an external diameter of the optical fiber itself is uneven and a core position for the external diameter of the optical fiber is also uneven. Accordingly, it is not possible to arrange many optical fibers in one or two-dimensional manner with a high accuracy.

Further, in the optical fiber block holding many optical fibers therein, as shown in Fig. 9, the direction and amount of deviation or misregistration of each optical fiber are uneven, Accordingly, even though the optical axis is adjusted in accordance with one optical fiber, there is some possibility that the optical.axis adjustment of the other optical fibers is deteriorated.

It is therefore an object of the present invention to solve the above-mentioned problems and to provide an improved optical module and an improved method of forming the optical module.

From a first aspect, the present invention provides an optical module comprising an optical fiber block holding an optical fiber therein and a transparent block of which one surface contacts with the optical fiber block, the optical module being characterized in that an diffraction grating is provided on a surface of the transparent block opposite to the optical fiber block, wherein the diffraction grating is constructed to allow the light from one optical system emitted from the optical fiber to emit toward the other optical system parallel or at a predetermined angle to an optical axis of the optical fiber, or it is constructed to condense the light incident from the other optical system toward an end surface of the optical fiber.

An optical module according to a second aspect of the invention comprises an optical fiber block holding an optical fiber therein and a transparent block spaced apart a predetermined distance from the optical fiber block, the optical module being characterized in that a diffraction grating is provided on a surface of the transparent block facing the optical fiber block, wherein the diffraction grating is constructed to allow the light from one optical system emitted from the optical fiber to emit toward the other optical system parallel or at a predetermined angle to an optical axis of the optical fiber, or it is constructed to condense the light incident from the other optical system toward an end surface of the optical fiber.

In one embodiment, a plurality of optical fibers are provided and preferably a plurality of diffraction gratings are also provided to correspond to the plurality of optical fibers. However, the refractive index of each diffraction grating differs to correspond to the positional misregistration or deviation of 'each optical fiber,

The diffraction grating is made of, for example, a photo-refractive material. Since a characteristic of the diffraction grating according to the present invention can be changed for each optical fiber, it is possible to obtain the same result as that available when the optical axis is individually adjusted.

According to a further aspect the invention provides a method of forming an optical module comprising the steps of: bringing an optical fiber block holding an optical fiber therein and a transparent block of which one surface is provided with a photo-refractive material layer into contact with each other so that the photo-refractive material layer is situated on the opposite side of the transparent block from the optical fiber block, dividing a laser beam from a laser beam source into an object beam and a reference beam; allowing the object beam to enter the optical fiber held by the optical fiber block; superimposing the object beam from the optical fiber on the reference beam in the photo-refractive material layer; and forming a diffraction grating corresponding to the strength of light intensity caused by the superimposition in the photo-refractive material layer.

According to a still further aspect, the invention provides a method of forming an optical module, which comprises the steps of: arranging an optical fiber block holding an optical fiber therein and a transparent block of which one surface is provided with a photo-refractive material layer at a fixed distance from one another so that the photo-refractive material layer faces the optical fiber block; dividing a laser beam from a laser beam source into an object beam and a reference beam; allowing the object beam to enter the optical fiber held by the optical fiber block; superimposing the object beam from the optical fiber on the reference beam in the photo-refractive material layer; and forming a diffraction grating corresponding to the strength of light intensity caused by the superimposition in the photo-refractive material layer.

The reference beam can be a collimated beam having the light flux cross-sectional area which covers an effective area of the entire transparent block or a collimated beam having the light flux cross-sectional area which covers an effective area of each diffraction grating formed in the transparent block.

To obtain the reference beam divided to cover the effective area of each diffraction grating, it is necessary to prepare a microlens array different from the above. The reference beam is caused to enter the microlens array using another optical fiber block and then, a collimated beam having the light flux cross-sectional area which covers the effective area is irradiated on each diffraction grating forming the optical module via each microlens of the microlens array.

It is desirable that the Gaussian beam waist of the collimated reference beam be spaced apart a predetermined distance from the diffraction grating formed and the reference beam be also a divergent spherical wave diverged from a position spaced apart a predetermined distance from the diffraction grating formed.

In this manner, even though there is some misregistration or deviation between the optical fiber and the optical axis, the diffraction grating can deflect the direction of the light flux to allow the object beam to emit in the desired direction.

Further, since each diffraction grating is recorded using the reference beam based on the optical fiber fixed in advance, it is possible to deflect the object beam in the direction of the reference beam in response to each misregistration or deviation. Accordingly, it is possible to emit the beam array in the same direction even though the array of the optical fiber in the optical fiber block is not necessarily accurate.

Still further, it is possible to adjust a plurality of optical fibers and a plurality of diffraction gratings corresponding thereto simultaneously and individually.

Preferred embodiments of the invention will now be described, by way of example only, and with reference to the accompanying drawings, in which:
Fig. 1 (a)-(b) are cross-sectional views of an optical module according to the present invention in which one piece each of an optical fiber and a microlens is shown as one example;
Fig. 2 is a view explaining a method of forming the optical module shown in Fig. 1(a);
Fig. 3 is a cross-sectional view of an optical module according to the present invention in which a plurality of optical fibers is shown together with a plurality of microlenses as one example;
Fig. 4 is a view taken along the line A - A of Fig. 3;
Fig. 5 is a view explaining a method of forming the optical module shown in Fig. 3;
Fig. 6 is a view showing another embodiment of an optical module;
Fig. 7 is a view explaining another embodiment of a method of forming an optical module;
Figs. 8(a) to 8(c) are views explaining a malfunction of a conventional optical module;
Fig. 9 is a view explaining a malfunction of a conventional optical module.

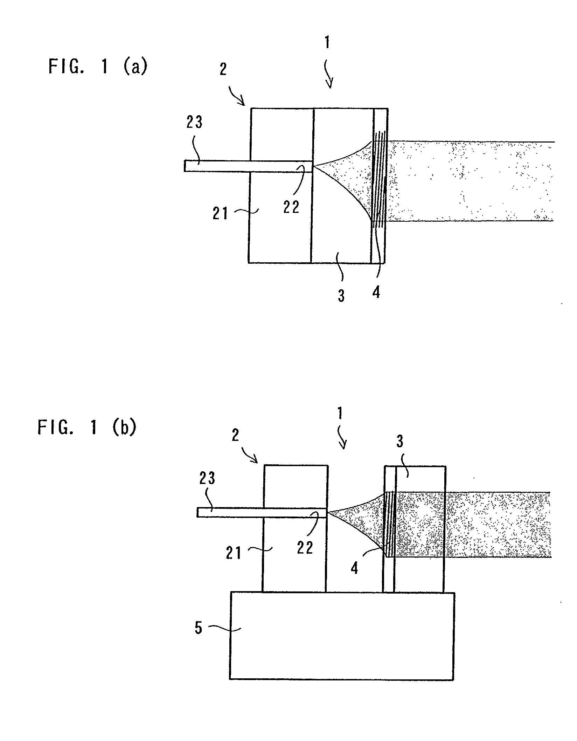

Fig. 1 (a)-(b) are cross-sectional views of an optical module according to the present invention in which one piece each of an optical fiber and a microlens is employed as one example. In an optical module 1 shown in Fig. 1(a), an optical fiber block 2 is disposed to contact with a transparent block 3. The optical fiber block 2 is made of a silicon substrate 21 in which a groove or an opening 22 is formed. A single mode of optical fiber 23 is firmly secured in the groove or opening 22. It should be noted that the optical fiber block 2 is not limited to this structure, but can be made of, for example, a stainless steel substrate or a glass substrate which has been formed with an opening in advance into which the optical fiber is inserted and firmly secured.

A diffraction grating 4 is provided on a side of the transparent block 3 opposite to the optical fiber block 2 to allow an object beam to emit parallel to an optical axis. In the present embodiment, the diffraction grating 4 also exhibits a function as a condensing lens to make a light path of the object beam parallel to the optical axis and emit it as a collimated beam.

Referring to the optical module 1 shown in Fig. 1(b), the optical fiber block 2 and the transparent block 3 are firmly secured to a base 5. The diffraction grating 4 is provided on a surface of the transparent block 3 opposite to an end of the optical fiber 23 from which the object beam is emitted.

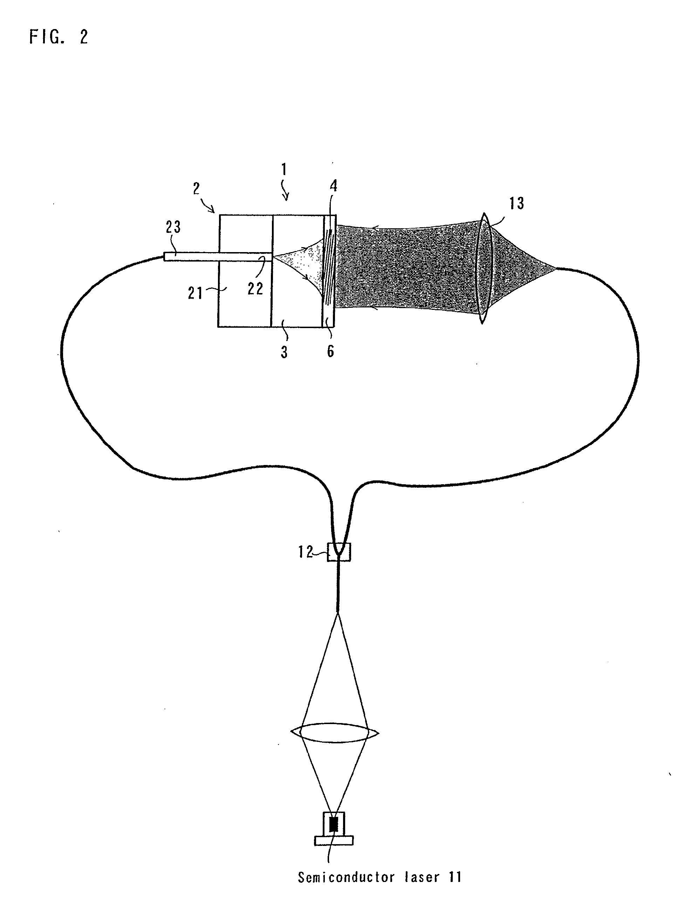

A means for forming the diffraction grating 4 will now be explained with reference to Fig. 2. The optical module 1 shown in Fig. 1(a) is taken as an example. First, the transparent block 3 is caused to contact with the optical fiber block 2. A photo-refractive polymer layer 6 is to be formed in advance on a surface of the transparent block 3 opposite to the optical fiber block 2. The photo-refractive polymer layer 6 is a material with a specific characteristic whereby the refractive index changes according to the intensity of the irradiation light and the change of the refractive index is fixed after the irradiation of light is stopped. It should be noted that another material can also be used for the photo-refractive material layer as far as it is a photo-refractive material having such a characteristic.

Referring to Fig. 2, reference numeral 11 is a semiconductor laser serving as a light source and 12 is a light division means for dividing a laser beam from the semiconductor laser into an object beam and a reference beam. Reference numeral 13 is a lens for making the reference beam parallel to the optical axis and allowing it to enter the photo-refractive polymer layer 6 from an opposite side of the object beam.

The reference beam is changed by the lens 13 to a collimated beam having a light flux cross-sectional area which covers an effective area of the diffraction grating 4 formed in the photo-refractive polymer layer 6. A beam waist of the Gaussian beam of the collimated reference beam is provided to have a predetermined distance away from the photo-refractive polymer layer 6. Further, the reference beam is a divergent spherical wave diverged from a position a predetermined distance away from the photo-refractive polymer layer 6.

In this manner, the object beam divided by the light division means 12 is caused to enter the optical fiber 23 and the object beam emitted from the optical fiber 23 is caused to enter the photo-refractive polymer layer 6. On the other hand, the reference beam divided by the light division means 12 is irradiated on the photo-refractive polymer layer 6 from the opposite side.

As a result, the object beam is superimposed on the reference beam in the photo-refractive polymer layer 6 to form an interference pattern or fringe. This interference pattern corresponds to the strength of light intensity and as described above, the photo-refractive polymer layer 6 has a specific characteristic whereby the refractive index changes according to the strength of the light irradiated and this change is fixed even after the irradiation light is stopped. Thus, the diffraction grating 4 corresponding to the interference pattern is recorded on the photo-refractive polymer layer 6.

The diffraction grating 4 recorded in this manner exhibits a specific characteristic whereby the object beam emitted from the optical fiber 23 is emitted in the direction of the reference beam, namely parallel to the optical axis of the optical fiber 23. (According to the principle of holography, the diffraction grating recorded by the object beam and the reference beam diffracts the object beam, once entered, in the original direction of the reference beam.)

The optical module shown in Fig. 1(b) is also formed in the same manner as above.

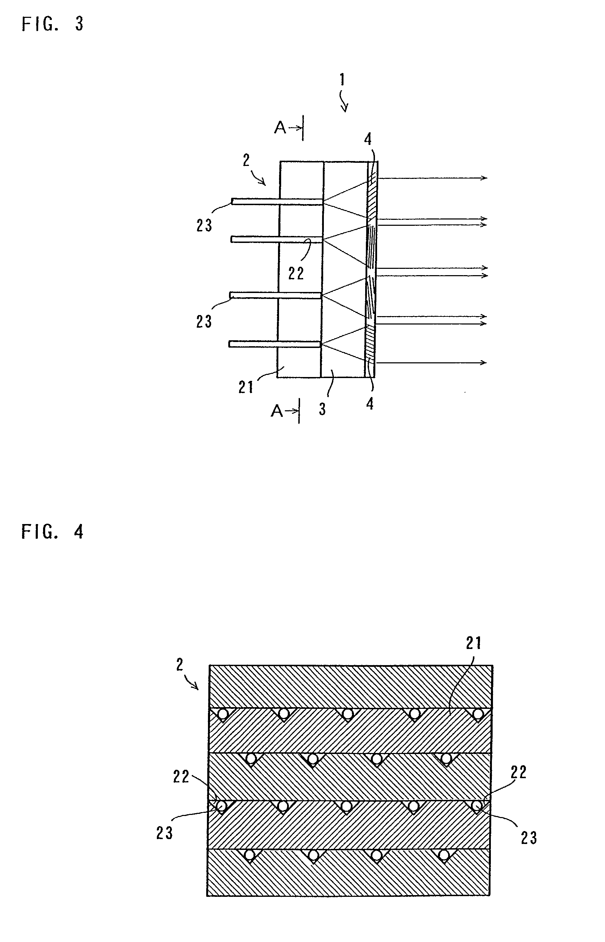

Fig. 3 is a cross-sectional view of an optical module according to the invention in which a plurality of optical fibers and microlenses are provided and Fig. 4 is a view taken along the line A-A of Fig. 3. In this embodiment, the optical fibers 23 arranged in one or two-dimensional manner are held by the optical fiber block 2. Disposed to contact with one side of the optical fiber block 2 is a transparent block 3 which is provided with the diffraction grating 4 corresponding to each optical fiber 23. The optical module can be constructed as shown in Fig. 1(b).

In the case where a plurality of optical fibers 23 is provided, misregistration or deviation of the optical fibers 23 differs respectively. Accordingly, each diffraction grating 4 which makes the object beam emitted from each fiber 23 parallel to an optical axis has also a different characteristic in each section.

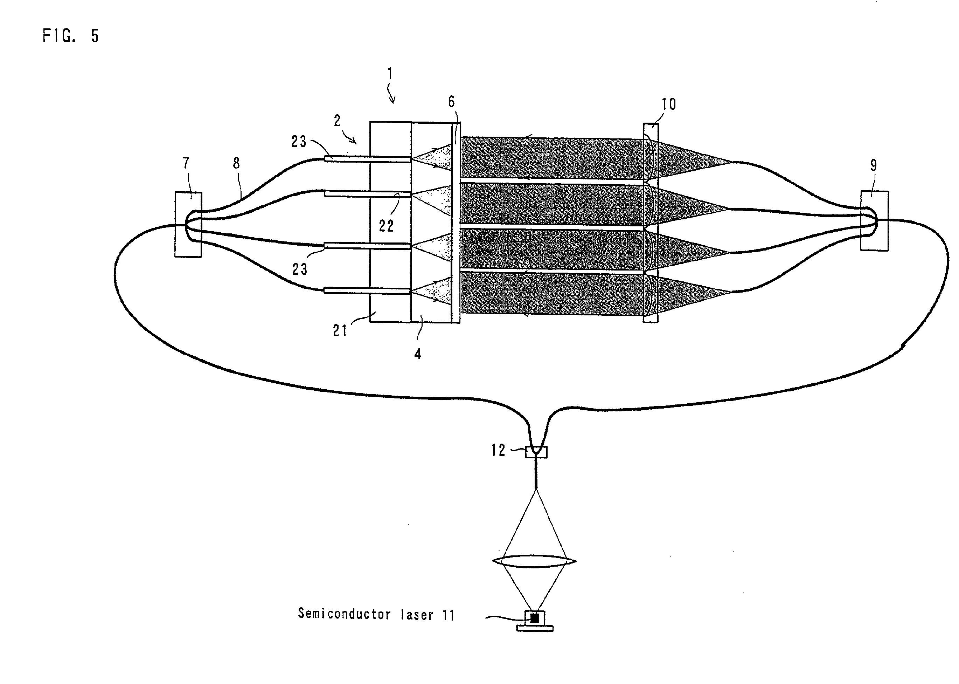

Fig. 5 is a view explaining a method of forming the optical module shown in Fig. 3. According to this method, the object beam divided by a light division means 7 is caused to enter each optical fiber 23 of the optical fiber block 2 via optical fibers 8. On the other hand, the reference beam is caused to enter the photo-refractive polymer layer 6 via a light division means 9 and a microlens array 10. In the same manner as the previous embodiment, the diffraction grating 4 corresponding to an interference pattern by the object beam and the reference beam is formed in the photo-refractive polymer layer 6.

In the figure, a light flux cross-sectional area of the reference beam is provided to cover an effective area of each diffraction grating 4 of the photo-refractive polymer layer 6. However, one collimated lens can be employed in place of the microlens array 10 to provide a collimated beam having the light flux cross-sectional area which covers the effective area of the entire photo-refractive polymer layer 6.

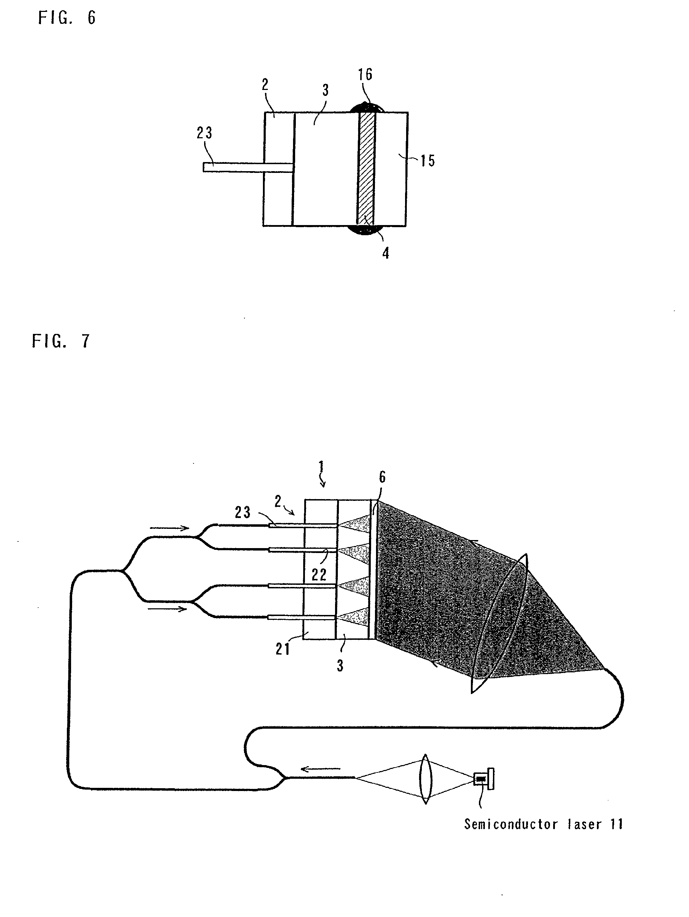

Fig. 6 is a view showing another embodiment of the optical module. In this embodiment, a transparent cover 15 is provided outside the transparent block 3 to protect the diffraction grating 4. In this case, the outside of the diffraction grating 4 is sealed by a hermetic sealing member 16.

In the above-mentioned embodiments, there are shown the examples in which the object beam emitted from the optical module 1 runs parallel to the optical axis by providing the diffraction grating. However, according to the present invention, it is possible to positively cause the object beam to emit at a predetermined angle to the optical axis. Namely, Fig. 7 is a view explaining another embodiment of a method for forming the optical module, in which the reference beam is caused to enter the photo-refractive polymer layer 6 at a predetermined angle to the optical axis of the optical fiber 23.

The reference beam in the case where the diffraction grating 4 is recorded and formed is oriented in the same direction as the light emitted in the actual use condition. Accordingly, if the reference beam is caused to enter or be incident at a predetermined angle, it is possible to form the diffraction grating 4 corresponding to such an incident angle.

As described above, according to the present invention, since the direction of the light flux is caused to deflect and condense by the diffraction grating, it is possible to allow the object beam to emit as a collimated beam in a desired direction without employing a lens.

Further, as an individual diffraction grating is recorded using the reference beam based on the optical fiber which has been fixed in advance, it is possible to deflect the object beam in the direction of the reference beam in response to each misregistration or deviation of the optical fiber. Accordingly, even though the array of the optical fiber is not necessarily accurate especially in the optical fiber block, it is possible to emit the beam in the same direction.

In particular, even in the case where the optical fiber block holds many optical fibers therein, as an individual diffraction grating corresponding to the misregistration or deviation of each optical fiber can be simultaneously formed, it is extremely effective,

## Claims

1. An optical module (1) adapted to emit the light incident from one optical system toward another optical system comprising:
an optical fiber block (2) holding an optical fiber (23) therein; and
a transparent block (3) having one surface in contact with the optical fiber block;
**characterized in that** a diffraction grating (4) is provided on a surface of the transparent block opposite to the optical fiber block;
wherein the diffraction grating is constructed to allow the light from one optical system emitted from the optical fiber to emit toward the other optical system parallel or at a predetermined angle to an optical axis of the optical fiber, or it is constructed to condense the light incident from the other optical system toward an end surface of the optical fiber.

2. An optical module (1) adapted to emit the light incident from one optical system toward another optical system comprising:
an optical fiber block (2) holding an optical fiber (23) therein; and
a transparent block (3) separated by a predetermined distance from the optical fiber block;
**characterized in that** a diffraction grating (4) is provided on a surface of the transparent block facing the optical fiber block;
wherein the diffraction grating is constructed to allow the light from one optical system emitted from the optical fiber to emit toward the other optical system parallel or at a predetermined angle to an optical axis of the optical fiber, or it is constructed to condense the light incident from the other optical system toward an end surface of the optical fiber.

3. An optical module (1) as claimed in claim 1 or 2, wherein the optical fiber block (2) holds one optical fiber (23) therein and the transparent block (3) is provided with one diffraction grating (4) corresponding to the one optical fiber.

4. An optical module (1) as claimed in claim 1 or 2, wherein a plurality of optical fibers (23) is arranged and held in the optical fiber block (2) in a one or two-dimensional manner, and the diffraction gratings (4) corresponding to the plurality of optical fibers are arranged and formed in the transparent block (3) in a one or two-dimensional manner.

5. An optical module (1) as claimed in any preceding claim, wherein the optical fiber block (2) and the transparent block (3) are firmly secured to a base (5).

6. An optical module (1) as claimed in any preceding claim, wherein the diffraction grating (4) is made of a photo-refractive material (6) of which the refractive index changes according to the intensity of light irradiated thereon and the change is fixed therein.

7. A method of forming an optical module (1) adapted to emit the light incident from one optical system toward another optical system comprising the steps of:
bringing an optical fiber block (2) holding an optical fiber (23) therein and a transparent block (3) of which one surface is provided with a photo-refractive material layer (6) into contact with each other so that the photo-refractive material layer is situated on the opposite side of the transparent block from the optical fiber block,
dividing a laser beam from a laser beam source (11) into an object beam and a reference beam;
allowing the object beam to enter the optical fiber held in the optical fiber block;
superimposing the object beam from the optical fiber on the reference beam in the photo-refractive material layer; and
forming a diffraction grating (4) corresponding to the strength of light intensity caused by the superimposition in the photo-refractive material layer.

8. A method of forming an optical module (1) adapted to emit the light incident from one optical system toward another optical system comprising the steps of:
arranging an optical fiber block (2) holding an optical fiber (23) therein and a transparent block (3) of which one surface is provided with a photo-refractive material layer (6) at a fixed distance between them so that the photo-refractive material layer faces the optical fiber block;
dividing a laser beam from a laser beam source (11) into an object beam and a reference beam;
allowing the object beam to enter the optical fiber held in the optical fiber block;
superimposing the object beam from the optical fiber on the reference beam in the photo-refractive material layer; and
forming a diffraction grating (4) corresponding to the strength of light intensity caused by the superimposition in the photo-refractive material layer.

9. A method of forming an optical module (1) as claimed in claim 7 or 8, wherein the reference beam is a collimated beam having a light flux cross-sectional area which covers an effective area of the entire transparent block (3).

10. A method of forming an optical module (1) as claimed in claim 7 or 8, wherein the reference beam is a collimated beam having a light flux cross-sectional area which covers an effective area of each diffraction grating (4) of the transparent block (3).

11. A method of forming an optical module (1) as claimed in claim 9 or 10, wherein the Gaussian beam waist of the collimated reference beam is provided at a predetermined distance away from the diffraction grating (4) formed.

12. A method of forming an optical module (1) as claimed in claim 9 or 10, wherein the reference beam is a divergent spherical wave diverged from a position a predetermined distance away from the diffraction grating (4) formed.
